# EUROPEAN PATENT APPLICATION

(11) **EP 1 388 986 A1**
(43) Date of publication of application: **11.02.2004**
(21) Application number: 02354120.4
(22) Date of filing: 06.08.2002
(51) Int. Cl.: H04L 12/58, H04L 29/06

(54) **Process for protecting personal identification data in a network by associating substitute identifiers**

(71) Applicant: Hewlett Packard Company, a Delaware Corporation, Palo Alto, CA 94304 (US)
(72) Inventor: Chalon, Denis, 38000 Grenoble (FR); Richard, Bruno, 38920 Crolles (FR)
(74) Representative: Lloyd, Richard Graham

(57) **Abstract**

A process which provides confidentiality over an Internet or intranet network by associating to a main email account, a set of one or more substitute accounts which are automatically generated, maintained and deleted. More particularly, there is provided a process for processing an electronic email message which comprises the steps of:
- detecting (31) the occurrence of a predetermined condition existing within said email generated by one main email account;
- in response to said detection, creating (34) a substitute email account to be used in lieu of said electronic message;
- transmitting (35) said electronic message with the references to said substitute email account to said recipient.

## Description

### Technical field of the invention

The invention relates to telecommunications and more particularly to a process for protecting personal references or identification data against misuse.

### Background art

The constant progress of the Information Handling System (I.H.S.) technology and that of the communication systems, particularly with the explosion of the Internet and intranet networks, have resulted in the development of an era of information and services. With a single computer, one individual is offered direct access to a highly effective communication tool as well as access to a wide range of information and services.

Electronic mail has become one prominent part of the Internet communication tools. By sharing one's personal address, an individual is given the possibility to communicate and to instantaneously transmit and receive information throughout the world. As in other areas of the human activities, a technical breakthrough - while offering new freedom to the public, is rapidly accompanied by a number of deviations and misuses are perceived as an obstacle to the widespead uptake of the tool.

One particular such misuse which web consumers are concerned about results from the diffusion of their personal identification references, particularly their email addresses, throughout the Internet network. Most commercial companies have found a strong interest in collecting their customer's personal identification references and gathering them as valuable data which they might use for many different purposes or communicate on a financial basis to other entities and commercial organizations. As a consequence, it is not rare that when a customer subscribes to a new service or completes a transaction on the Internet network, they also receive a large number of unsolicited commercial submissions and offers. While a customer would be free to walk and gather commercial information in a commercial fair without exposing his or her personal identification data and references, the new Internet consumer is more often than not invited to leave behind them an email address when showing some interest in any particular product or service displayed on the web.

As a consequence, e-commerce consumers are faced with an increasing number of electronic mails reaching their mailbox, including many unsolicited business and commercial offers.

It is thus highly desirable that the web consumer be able to keep some control on the use of personal information, and specifically their email address.

Some proficient users have found a partial solution by using multiple email addresses and accounts, that are each reserved for particular areas of activities and types of transactions. This divides the problem and reduces the number of unsolicited electronic mail reaching any one mailbox. The problem is, however, not eliminated with this method which, further, is quite cumbersome and reserved to web consumers that are well versed in the use of computers and comfortable with the settings of electronic mail software.

### Summary of the invention

This invention provides a process for protecting personal references or identification data in a transaction or communication with a network, which comprises the steps of:
- detecting the potential use of said personal reference and identification data;
- in response to said detection, obtaining a substitute set of references;
- transmitting said substitute said of references in place of said personal references and identification data to said recipient.

Preferably, the personal reference is a email address and the process involves the steps of 1. identifying a new email account associated with a new email reference in response to the detection of said potential use, and 2. transmitting said new email reference to the network.

In one embodiment, the detection of the potential use of the personal reference is made within an SMTP session - based on the detection of predetermined words existing in a email message or one the actuation of a specific icon or menu item by the user. In other embodiments, the detection is achieved within an HTTP session for the purpose of protecting the information transmitted via a web browser.

In at least some specific embodiments, there confidentiality of the messages transmitted through the internet network in enhanced by automatically associating one or more substitute email accounts with one main email account. Thus a process for processing an electronic message is provided which involves the steps of:
- detecting the occurrence of a predetermined condition existing within said email generated by one main email account;
- in response to said detection, creating a substitute email account to be used in lieu of said electronic message;
- transmitting said electronic message with the references to said substitute email account to said recipient.

The substitute email account can be created with an auto-forward option being activated so that any response will be forwarded to the originating main email account.

The SMTP server can be arranged to scan each email being transmitted by the user and to automatically detect some predefined words, such as "SUBSCRIBE", or "SUBSCRIPTION" etc... In response to the detection of such a word, a substitute email account is automatically generated.

Alternatively, the creation of the substitute email account can be controlled by the actuation, in the mailing software, of one specific key requesting the activation of a Restricted Diffusion Email Address (RDEA) feature.

The process can be adapted to be incorporated within a STMP server which scans the emails to be forwarded outside an intranet network. Preferably, the SMTP server also detects the occurrence of words such as UNSUBSCRIBE or UNSUBSCRIPTION for the purpose of automatically deleting the corresponding substitute email accounts.

In this way, there is provided an easy and effective way of keeping control of the diffusion of electronic addresses throughout the Internet. It is even made possible to track the different in-coming mails and to determine from which first email the corresponding substitute email account was created. Preferably, there is also provided an effective Graphical User Interface which allows easy management of the different substitute accounts, thereby providing easy deactivation, activation of the option, and even status like HOLD which temporary deactivates the auto-forward option of the corresponding substitute email account.

The invention is well adapted to implementation within email software or web browsers, thus increasing the confidentiality and preventing misuse of a main email address as the customer is surfing the Internet or exchanging email notes.

### Description of the drawings

An embodiment of the invention will now be described, by way of example only, with reference to the accompanying drawings, wherein:
Figure 1 illustrates a typical environment where the invention can be embodied.
Figure 2 illustrates the general process achieving protection of the personal reference or private identification data.
Figure 3 illustrates the use of the general process in a SMTP session.
Figure 4 illustrates the exchange of messages between the originating email account, the substitute account and the external recipient of the message in the SMTP session.
Figure 5 shows the process executed by the agent within the SMTP server when a substitute email account has to be discarded
Figure 6 illustrates a second embodiment achieving protection of private reference data in a SMTP session.
Figure 7 illustrates the SMTP process in the second embodiment of figure 6.

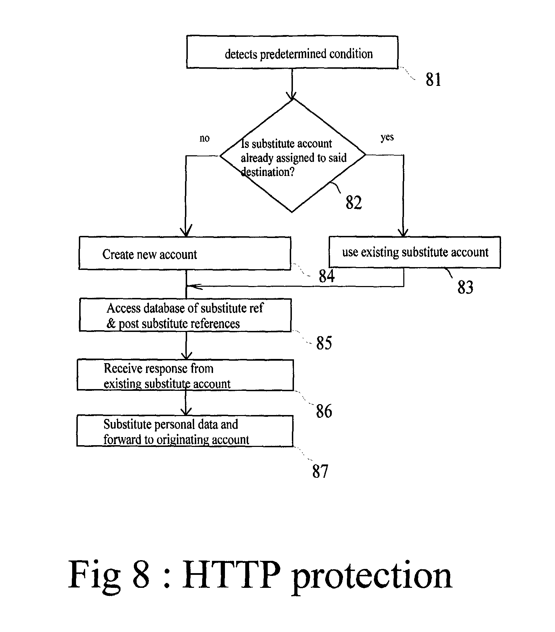

Figure 8 illustrates the use of the general process of figure 2 in a HTTP session.
Figure 9 illustrates the exchange of messages between the web browser and the HTTP proxy in the second embodiment.

### Description of the preferred embodiment of the invention

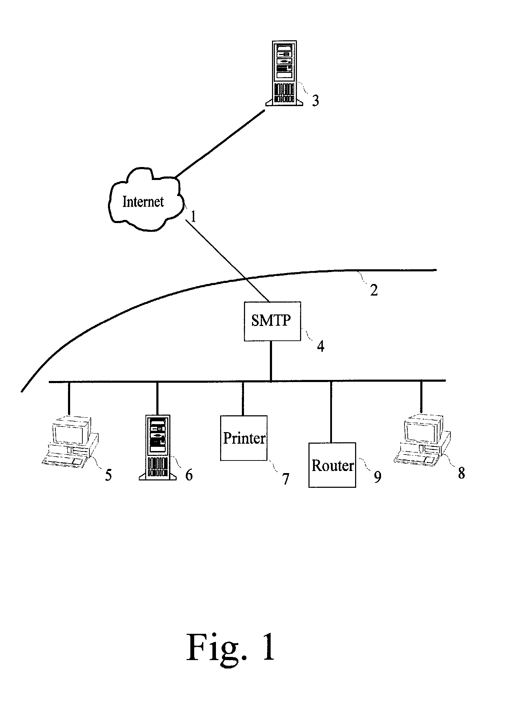

With respect to figure 1 there is illustrated a typical network environment - a corporate environment based on a intranet network 2 which communicates with an internet network 1. Communication between the intranet network and the internet network 1 is achieved via a computer 4 serving as a Proxy and also hosting an SMTP server for the outgoing mail. For the sake of illustration only, the intranet network is shown to include two computers, respectively computers 5 and 8, a server 6, a printer 7 and a router 9.

The SMTP server is associated with a POP server (not represented in the figure) which provides to each individual within the intranet network an email software facility for communicating both inside and outside the intranet network, for instance with a computer or server 3. It should be noticed that, in accordance with the different configurations of the intranet network, different SMTP servers may be arranged for supporting the email distribution service.

Computers 5 or 8 are fitted with communication circuitry and software providing a TCP/IP communication stack for supporting the communication layers which are involved in the communication steps of the process described herein. In most cases, access to the Internet network is achieved via the World Wide Web via the well-known Hyper Text Transfer Protocol (HTTP), which is provided by means of an information access/management tool such as a browser (not shown in figure 1), for instance Netscape (manufactured by Netscape Inc.), or Internet Explorer (manufactured by Microsoft Corporation of Redmond, Washington, USA). The browser provides access to web servers and constitutes the heart of the interaction between the latter and the user's machine. While HTTP is very useful, particularly because it is well adapted to the use of firewalls, any other suitable protocol allowing communication via the network can be used. The computer is also fitted with a email communication tool, such as such as Outlook Express or Outlook marketed by Microsoft Corp. which is used for transmitting and receiving electronic mail.

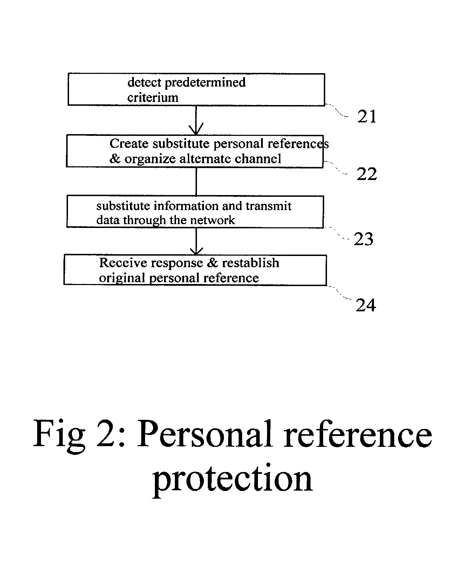

Figure 2 illustrates the general principle of the process which achieves protection of private personal references and identification data. Specifically, the process will be considered in relation to the protection of an email address, although the process may be adapted to the protection of any kind of personal and private references.

The automatic representation process is launched with a step 21 which consists in the detection of a predefined event, condition or criterion. Clearly, any type of condition may be used, such as the detection of specific words or access to specific files. In some embodiments, a condition might consist in the use of particular information that is recorded in one or more profile files registered within the system as being sensitive.

In a step 22, following the detection of the predefined condition, a set of substitute personal references are created without involvement of the user.

Once created, the substitute personal references are used for arranging an alternate communication channel which is used for performing a transaction. Thus, in a step 23, the process then substitutes the original personal reference, in this example the email address, and uses a substitute email address for the purpose of the transmission of electronic mail.

The transaction, information or email resulting from the substitution of the private references is processed in a step 24 and a further substitution occurs for the purpose of reestablishing the original personal reference so that the process remains fully transparent to the user.

The relation between the original private information and the substitute information is stored within a database which is created and maintained by the system. The process of figure 2 can be used in a wide number of situations and achieves automated replacement of the private reference by substitute references which are systematically used and maintained under control of the user. Effective protection of SMTP, HTTP, NNTP and generally any kind of transaction and communication environment can be achieved.

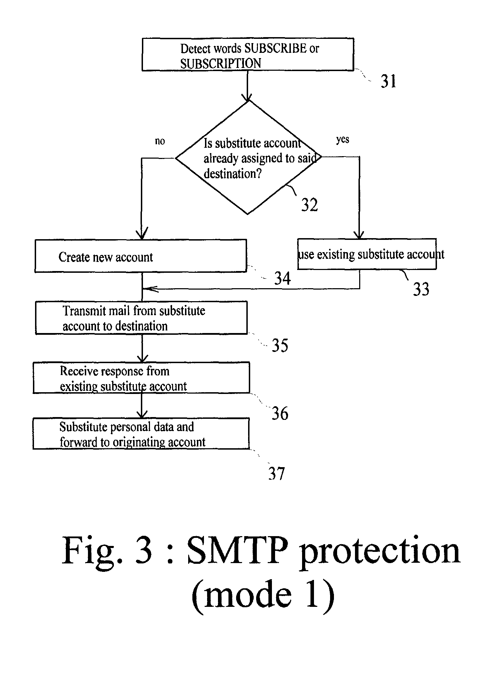

There will now be described the use of this technique for the protection of an SMTP session, and particularly an email address. Two particular embodiments, respectively illustrated in figure 3-4 and 5-6 will be discussed.

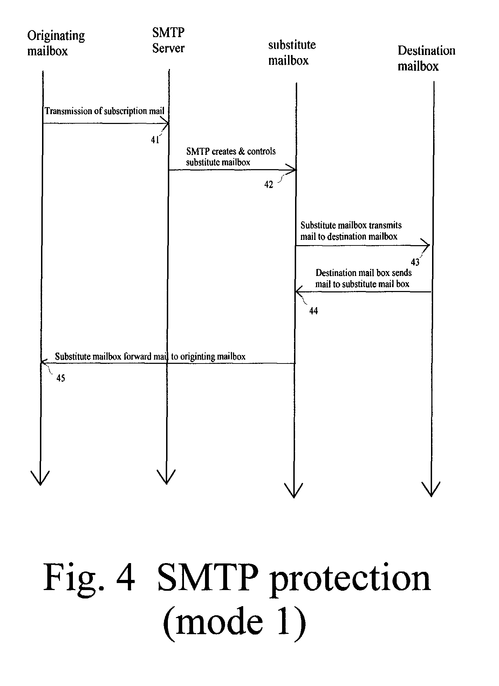

The first embodiment is illustrated in figures 3 and 4. There is provided a process which is preferably performed within an SMTP server, without the need to change the individual email software that is installed within the computers. For this purpose an agent is installed in the SMTP server that allows control to be kept on the use and the diffusion of personal identity references, and particularly the email address. The agent provides for automatic creation and management of substitute email accounts associated with the user's main personal email account.

The first embodiment of the SMTP session will now be described with reference to figure 3 which shows the process that is executed by the agent within the SMTP server.

In a step 31, the process is launched upon the detection of a predetermined criterion concerning a particular email. In the embodiment described, the criterion is linked to the detection of the words "SUBSCRIBE" or "SUBSCRIPTION" in the originating email indicating that the user is going to transmit some personal data - and particularly the email address - to a third party. Clearly, detection of these particular words is merely one example and the process may be adapted to detect any other suitable events for the purpose of launching the process of figure 3.

This can be achieved, for instance, by detecting the searched word within the SUBJECT field within the text file containing the note, as in the following:
X-Mailer: Sendmail
MIME-version: 1.0
Content-type: text/plain
To: mailto:emdebian-discuss-equest@lists.sourceforge.net
Sender: Myself@mycorporate.com
Date: Sun, 24 Jun 2001 12:01:40 -0700
Subject: subscribe
End of Mail

This detection is carried out when the STMP server receives the outgoing mail, as illustrated on the figure 4 with reference to arrow 41.

Upon detection of the particular criterion, the SMTP server executes a test in a step 32 to determine whether a substitute account already exists in the database of the substitute accounts that has been already assigned to the particular destination defined by the originating email. If this is the case, then the process proceeds to a step 33 where the preexisting substitute account is identified and the process will then go to step 35. While this is not the preferred embodiment, the user may be given the possibility, by means of a pop-up window for instance, to choose a substitute account for redirecting the original mail. However, in the preferred embodiment, it is assumed that most users do not wish to be concerned with this mechanism and that confidentiality should be provided without requiring manual intervention.

If no email account is already assigned to the considered destination, then the process automatically creates a substitute email account in a step 34 for the purpose of preserving the confidentiality of the originating email address, or at least for allowing control of the use of the email transmitted by the user. More generally, the SMTP server is associated with a database of substitute accounts which is continuously maintained in accordance to the users' requirements. Clearly many embodiments can be arranged for step 34 for creating this new email-account. In a corporate environment, the email-accounts can be internally handled at the level of the SMTP server while, in another embodiment, the new account can be created by an external Internet Service Provider by means of the agent running within the SMTP. For this purpose, the agent may generate an appropriate GET REQUEST command in accordance with the well known Hyper Text Transfer Protocol (HTTP) standard and to fill-in a form for the purpose of creating the substitute mailbox. In an UNIX environment, one embodiment, the new substitute account could be directly created in an UNIX environment in response to a new creation of a new user. Preferably, the generation of the new substitute accounts will follow a general policy or set of rules for the definition of the email identifiers. Indeed, it can be advantageous to define whether or not some personal identification data should be left within the new substitute accounts or should be automatically deleted. Once created, the new substitute account is configured with an auto-forward option so that incoming mail will be automatically transferred to the originating email account. Referring to figure 4, it can be seen that the creation of the substitute account is illustrated is represented by arrow 42.

It should be apparent that, as an alternative, the process may also invite the user, before creating the new account in accordance with step 34, to use a already existing account assigned to a different destination.

In a step 35, the SMTP server generates a new mail, based on the newly created (step 34) or one preexisting (step 33) account, and this new mail is then transmitted to the particular destination defined by the user - for instance server 3 in figure 1 - with the identification references of the substitute account. In one particular embodiment, the substitute email is directly generated by the SMTP server (illustrated by the dotted line of arrow 42 in figure 4) and transmitted to the appropriate destination while, alternatively, the SMTP server may control the substitute mailbox handled by an external Internet Service Provider - and specifically activates the auto-forward function - so that the latter can directly control the transmission of the substitute email to the appropriate destination.

The subscription mail is received by the destination and processed accordingly. If a response is provided, the latter will reach the substitute mailbox and will be forwarded in a step 36 to the originating email account be means of the auto-forward option (represented by arrow 44 in figure 4). When received by the SMTP server in a step 37, the response is processed for the purpose of substituting the email references contained in the email by modifying the *Sender* field within the electronic envelope.

The processed email is received by the originating mail box, and this is also illustrated by arrow 45 in figure 4.

In addition to the substitution of the email references, the SMTP server may optionally flag the incoming mail with an indication of associated substitute account. More specifically the email can be enriched with additional information such as a reference to the first email note which resulted in the generation of the corresponding substitute mail. This would permit the user to easily track any use and misuse of the personal data he/she provides to a commercial organization.

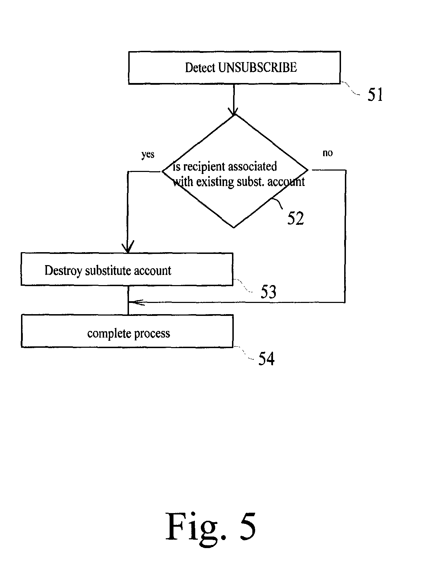

Figure 5 shows the process executed by the agent within the SMTP server when a substitute email account has to be discarded. This is automatically achieved, based for instance on a detection step 51 of the word "UNSUBSCRIBE", or "UNSUBSCRIPTION" or any other equivalent words. Upon detection of such words within the email, the process then goes to a step 52 to determine whether the recipient identified by the user is already associated with an existing substitute account, in which case the corresponding account is destroyed in a step 53. If the account has already been destroyed, then the process completes in a step 54. This therefore allows an easy and effective management of the substitute accounts as there are continuously created, maintained, and deleted from the list of substitute accounts handled by the SMTP server.

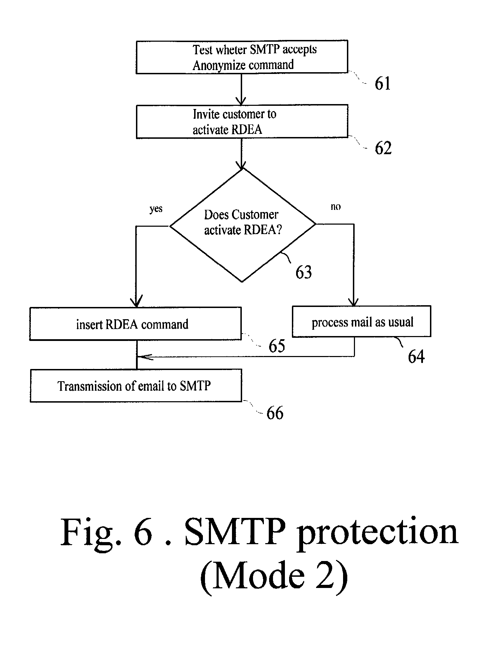

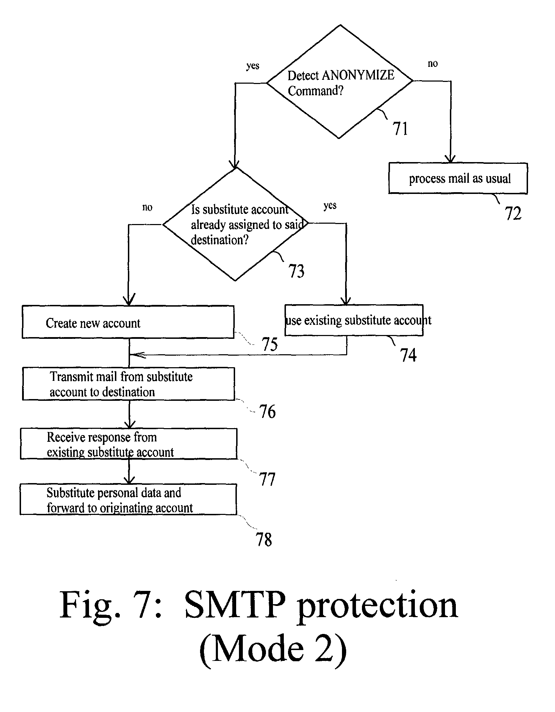

With respect to figure 6 and 7 there will now be described a second embodiment of the protection of the SMTP session. This is achieved by offering a new enhanced function to the user within the email software, which will be referred herein to as a Restricted Diffusion Email Address (RDEA) facility. In this embodiment, the function is associated with a specific icon which is displayed to the user and which allows them to control how the mail will be transmitted to any given recipient.

As shown in figure 6, the process starts with a step 61 for determining whether the SMTP server is ready to accept the new RDEA command. This can be achieved when the email account is being installed within the mail software or when the software is being launched, particularly after the issuance of the EHLO command requesting the SMTP to provide the number of commands which it can accept.

If the test of step 61 succeeds, then the process running in the mail software executes a step 62 where the user is invited to activate the Restricted Diffusion Email Address feature upon completion of the preparation of an email, be it a email for service subscription or any ordinary email.

A test is performed in a step 63 to determine whether or not the user has activated the corresponding RDEA icon. If the RDEA icon is not activated, then the process goes to a step 64 which is the normal processing of the electronic mail.

Conversely, if the user actuates the RDEA icon, then the process proceeds with a step 65 where a specific ANONYMIZE command is inserted within the electronic mail.

The process then transmits the email to the SMTP server in a step 66 so that the latter can process it in accordance with the process of figure 3 and, possibly, create a substitute email account.

With reference to figure 7, there is now described the process which is executed within the SMTP server for the purpose of processing the email containing the ANONYMIZE command.

The process is launched with a step 71 which is a test to determine whether the email envelope contains the ANONYMIZE command.

If this command is not detected, then the process processes the mail in conventional manner.

If the command is detected, the SMTP server executes a test in a step 73 to determine whether a substitute account already exists in the database of the substitute accounts and is already assigned to the particular destination defined by the email. If so, then the process proceeds to a step 74 where one preexisting substitute account is being considered and the process will then go to a step 76.

If no email account is already assigned to the considered destination, then the process automatically creates a substitute email account in a step 75. As before, the process can also invite the user, before creating the new account in accordance with step 75, to use a already existing account assigned to a different destination.

In a step 76, the SMTP generates a new email and this new email is then transmitted to the particular destination defined by the user - for instance server 3 in figure 1 - with the identification references of the substitute account. In some embodiments, the substitute email is directly generated by the SMTP server and transmitted to the appropriate destination while, alternatively in other embodiments, the SMTP server may control a substitute mailbox handled by an external Internet Service Provider to control the transmission of the substitute email to the destination.

The subscription mail is received by the destination and processed accordingly. If a response is provided, the latter will be sent to the substitute mailbox in a step 77 and will be forwarded to the originating email account after a substitution step 78 to restore the original personal references.

With reference to 8 there will now be described how the process of figure 2 can be applied to the protection of an HTTP session. In this situation, the web browser, such as Internet Explorer of Microsoft can be adapted in order to provide the detection of a predetermined condition which will result in the execution of the substitution process of the personal references or identification data of the user.

As described above, the detection of the particular event which causes the substitution of the personal references can be based on various elements, and many embodiments of the invention are possible. Preferably, the web browser is enriched with additional software instructions for performing the following process.

In a step 81, similarly as in step 31 of figure 3, the process detects the occurrence of a predetermined condition, such as, for instance, the fact that the user is typing an email address or personal reference which is detected to be included in some sensitive files or private profiles. In this event, a pop-up window is displayed to the user in order to inform the latter that they may activate the RDEA feature. Alternatively, the web browser may be enriched with an additional icon or menu item for controlling the execution of the RDEA facility via the incorporation of a new ANONYMIZE command within the HTTP header.

Upon detection of the predefined, the SMTP server executes a test in a step 82 to determine whether a substitute account already exists in the database of the substitute accounts and was already assigned to the particular destination defined by the originating email. If this is the case, then the process proceeds to a step 83 where a preexisting substitute account is identified and the process proceeds to a step 85.

If no email account is already assigned to the considered destination, then the process automatically creates a substitute email account in a step 84 which, in accordance with the particular embodiment, may be handled within the intranet network or even provided by an external web server. As previously, the auto-forward option is activated.

In a step 85, the web browser accesses the database containing the substitute reference to be used in place of the original reference and then posts the information to the server.

Once received in a step 86, the response is processed and, any reference to the substitute reference is deleted in a step 87 for the purpose of maintaining transparency to the user.

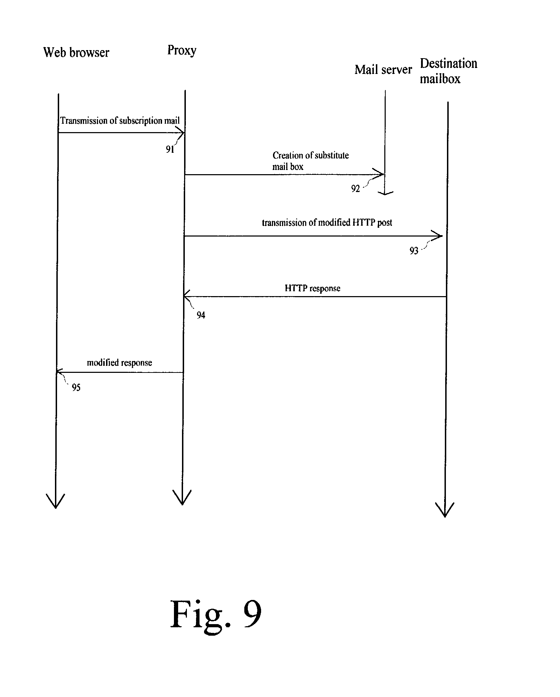

Figure 9 shows the different messages which are exchanged between the web browser, the proxy and the remote server. Arrow 91 illustrates the message from the web browser to the proxy. In response to the detection of the email address, the proxy creates a new mailbox with a substitute address - the reference of which is incorporated within the database of substitute addresses - and this is illustrated by the interaction shown with respect to arrow 92. Further, the proxy issues a modified HTTP post which carries the reference to the newly created email box, and this is illustrated by arrow 93. The answer provided by the remote server is illustrated by arrow 94 and, correspondingly, the proxy issues a modified response to the web browser which is illustrated by arrow 95.

In one embodiment, the process is executed within a proxy which interfaces the information between the web browser and the server on the web, so that the web browser requires no particular adaptation to fit the process. Alternatively, the proxy can be embodied as a DCOM object within the web browser for the purpose of implementing the above described mechanism.

It can be seen that, due to the creation of the new email account and to the substitution mechanism which is automatically provided, when the server responds, the email is first transmitted to the appropriate substitute address and is then forwarded to the main address of the user who is then guaranteed that their personal email address is not transmitted. Moreover, the above described techniques provide the user with a way to reduce the number of unsolicited emails they receive simply by eliminating one or more substitute email accounts; In preferred embodiments, this can be achieved by means of a general management software tool which provides, upon request of the user, a list of the different substitute addresses in use and allows the status to each substitute address to be switched, for instance, between ENABLE, DISABLE and HOLD states, the latter being associated with a temporary deactivation of the auto-forward option of the substitute mail box. In this case, assuming that the user wishes to reduce for some time the number of electronic mails, they are given the possibility to temporarily disable any one particular substitute mailbox. This results in the incoming mail simply being stored as long as the user keeps it in the HOLD status.

In preferred embodiments, the control of the different status of the substitute mailboxes is achieved via a Graphical User Interface (GUI) allowing easy control of each substitute mail box. The process may even be enriched with a tracking feature which permits to display each incoming mail with a reference to the corresponding substitute email account.

While the process was particularly described in reference to the arrangement of a Restricted Diffusion Email Address feature in a corporate environment based on an intranet network, it should be clear that the techniques described may easily be adapted to any type of configuration, and particularly to that of an Internet Service Provider in order to enable the provision of added value services to their customers by offering them confidential access.

## Claims

1. Process for protecting personal references or identification data in a transaction or communication with a network, said process comprising the steps of:
- detecting (21) the potential use of said personal reference or identification data;
- in response to said detection, obtaining (34) a substitute set of references
- transmitting to said recipient (35) said substitute said of references in place of said personal references or identification data.

2. Process according to claim 1 wherein said personal reference is a email address and wherein said process involves the steps of:
- identifying an email account associated with a new email reference in response to the detection of said potential use;
- transmitting said created email reference to the network.

3. Process according to claim 2 wherein said detection is performed within an SMTP session.

4. Process according to claim 3 wherein said detection is based on the detection of predetermined words existing in an email message.

5. Process according to claim 3 wherein said detection is initiated by a specific icon or menu item being actuated by the user.

6. Process according to claim 2 wherein said detection is performed within an HTTP session for the purpose of modifying said personal reference.

7. Process according to claim 6 wherein said detection is based on the detection of predetermined words which are likely to be posted to a web server.

8. Process according to claim 6 wherein said detection is based on the actuation of a specific icon or menu item by the user.

9. Process for processing an email generated by a main email account to be transmitted to a given recipient through an Internet network or an intranet network, said process involving the steps of:
- detecting (31) the occurrence of a predetermined condition existing within said email;
- in response to said detection, creating (34) a substitute email account to be used in lieu of said main email account;
- transmitting (35) said electronic message to said recipient with references to said substitute email account..

10. Process in accordance with claim 9 wherein said substitute account is generated with an auto-forward option being activated for the purpose of forwarding any response to said originating main email account.

11. Process in accordance with claim 9 wherein said detection is achieved by means of the detection of a given set of words existing within said electronic messages.

12. Process in accordance with claim 11 wherein the substitute email account is created upon detection of the words SUBSCRIBE or SUBSCRIPTION within said email.

13. Process in accordance with claim 9 wherein said predetermined condition corresponds to the actuation by the user of a predetermined icon corresponding to a Restricted Diffusion Email Address feature.

14. Process in accordance with claim 9 executed in a SMTP server.

15. Process in accordance with claim 11 executed in a SMTP server comprising detecting the occurrence of the words "UNSUBSCRIBE" or "UNSUBSCRIPTION" for the purpose of controlling the deletion of said substitute email account.

16. Process in accordance with anyone of the preceding claims comprising tracking any electronic mail coming from said substitute account for the purpose of displaying it to the user with a reference to said main email account.

17. Process in accordance with claim 10 comprising:
- maintaining a database of the different substitute email accounts that are created and with a corresponding status associated with an auto-forward option,
- displaying to the user the set of substitute email accounts, and the corresponding status;
- changing said status in response to an action from said user;
- correspondingly changing the auto-forward option associated with one particular substitute email address.

18. Process in accordance with claim 17 wherein each of said substitute accounts is associated with a status ENABLE, or DISABLE or HOLD.

19. Mail software computer program comprising program code elements for performing anyone of the processes of claims 1 to 5 and 9 to 18.

20. Web browser computer program comprising program code elements for performing anyone of the processes of claims 6 to 8.

21. SMTP server computer program comprising program code elements for performing anyone of the processes of claims 9 to 18.
